(19) Europäisches Patentamt
European Patent Office
Office européen des brevets

(11) **EP 2 795 310 B1**

(12) **FASCICULE DE BREVET EUROPEEN**

(45) Date de publication et mention de la délivrance du brevet:
**13.11.2019 Bulletin 2019/46**

(21) Numéro de dépôt: **12819092.3**

(22) Date de dépôt: **19.12.2012**

(51) Int Cl.:
***G01N 29/07*** *(2006.01)*

(86) Numéro de dépôt international:
**PCT/FR2012/052980**

(87) Numéro de publication internationale:
**WO 2013/093331 (27.06.2013 Gazette 2013/26)**

(54) **MÉTHODE DE MESURE DE PROPRIÉTÉS ÉLASTIQUES PAR ULTRASONS**

VERFAHREN ZUR MESSUNG ELASTISCHER EIGENSCHAFTEN MITTELS ULTRASCHALL

METHOD FOR MEASURING OF ELASTIC PROPERTIES BY ULTRASOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2011 FR 1161915**

(43) Date de publication de la demande:
**29.10.2014 Bulletin 2014/44**

(73) Titulaire: **Safran Aircraft Engines**
**75015 Paris (FR)**

(72) Inventeur: **CHATELLIER, Jean-Yves, François, Roger**
**77550 Moissy-Cramayel Cedex (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**WO-A1-99/44051      JP-A- 2008 232 825**
**US-A- 3 416 365**

**Description**

Domaine technique

L'invention concerne une méthode de test non destructif et plus particulièrement une méthode pour déterminer de façon non destructive, par ultrasons, les propriétés élastiques d'un matériau métallique isotrope.

Etat de la technique

Il existe un besoin permanent de disposer de méthodes permettant de déterminer les propriétés élastiques telles que le module d'Young ou le coefficient de Poisson de pièces réalisées dans des matériaux homogènes et isotropes. Il existe un besoin particulier d'une méthode concernant une pièce avec des surfaces extérieures courbes. La détermination du module d'Young par le moyen d'ondes ultrasonores est connue pour des pièces planes mais pour des pièces complexes, lorsque les surfaces extérieures sont courbes, il est difficile de placer correctement les émetteurs et récepteurs pour obtenir des résultats fiables.

Un moyen connu pour évaluer le module d'élasticité longitudinal - module d'Young - de pièces complexes, consiste à réaliser des éprouvettes en forme d'haltère que l'on place entre les mâchoires de machines de traction. Cependant la réalisation d'éprouvettes haltères n'est pas toujours possible ou peut être très onéreuse pour certains matériaux. En outre la forme de l'éprouvette est souvent très différente de celle de la pièce utilisée. En fonction du procédé de fabrication des pièces, la mesure de leur module d'élasticité peut ne pas être pertinente.

Le présent déposant s'est fixé comme objectif de mettre au point une méthode d'examen non destructif de pièces complexes, présentant notamment des formes courbes, et propose la mise en œuvre d'ondes ultrasonores pour la détermination des propriétés élastiques telles que le module d'élasticité longitudinal et le coefficient de Poisson.

US 3,416,365 décrit une méthode de détermination des propriétés élastiques d'une pièce à surface courbe et d'épaisseur donnée par le moyen de la mesure des ondes longitudinales et transversales parcourant le matériau dont l'épaisseur d est connue, cependant il n'enseigne pas son application à une pièce présentant deux épaisseurs selon des directions différentes.

Exposé de l'invention

L'invention est définie par la méthode selon la revendication 1.

De préférence, le faisceau d'ondes ultrasonores est émis à travers un fluide de couplage, tel que l'eau.

La méthode s'applique de manière avantageuse sur une pièce constituée en un matériau isotrope.

Conformément à l'invention, la méthode s'applique à une pièce sphérique, $d_1$ correspondant au diamètre de la sphère et $d_2$ à la longueur d'une corde formant ledit angle a. Par exemple, la méthode s'applique avantageusement à l'examen de billes métalliques, notamment en inox ; elle présente aussi un intérêt particulier pour des billes en matériau céramique tel que $Si_3N_4$, SiC ou $ZrO_2$, qui sont utilisées dans des roulements. Toutefois, la méthode n'est pas limitée à une pièce sphérique et peut être appliquée pour des formes plus complexes dans la mesure où l'on dispose d'une modélisation, notamment informatique, qui permet de prédire mathématiquement le cheminement des ondes ultrasonores à l'intérieur de la pièce.

On rappelle que les ondes transmises dans la pièce sont définies par rapport au plan d'interface entre la pièce et le milieu extérieur, qui sert de référence pour repérer la polarisation des ondes transversales et longitudinales. Ces ondes sont polarisées dans le plan sagittal, perpendiculaire au plan de l'interface, les ondes transversales étant générées par la transmission des ondes longitudinales à travers l'interface.

Il est connu que les propriétés élastiques d'un échantillon de métal ont une incidence sur la transmission des ondes longitudinales et transversales et leur vitesse ce qui permet en retour d'évaluer les propriétés élastiques à partir de la connaissance de ces dernières. La mécanique des petites déformations relie les vitesses de propagation des ondes longitudinales $V_L$ et transversales $V_T$ au module d'Young E et au coefficient de Poisson v.

Les relations sont les suivantes :

$$E = \rho V_T^2 \, (3V_L^2 - 4V_T^2) \, / \, (V_L^2 - V_T^2)$$

$$v = 0{,}5 \, (V_L^2 - 2V_T^2) \, / \, (V_L^2 - V_T^2)$$

Ainsi, ayant calculé les vitesses de propagation $V_L$ et $V_T$, on dispose des paramètres permettant de calculer le module d'Young et le coefficient de Poisson et à partir de là les autres caractéristiques du matériau.

Brève présentation des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés.
Sur ces dessins

- La figure 1 est une illustration schématique de la position en mode réflexion d'un transducteur ultrasonore par rapport à une sphère à analyser et les deux réflexions successives de l'onde ultrasonore longitudinale sur la sphère ;
- La figure 2 montre la trace sur un oscilloscope de la variation du signal produit par le transducteur dans le cas de la figure 1 avec l'écho d'interface et la réflexion sur le fond de la sphère.
- La figure 3 est un schéma, non à l'échelle, indiquant les deux positions successives d'un transducteur émetteur pour générer une onde transversale se propageant à 45° vers un transducteur récepteur disposé latéralement par rapport à l'émetteur sur la sphère ;
- La figure 4 montre une réalisation du montage utilisant des transducteurs émetteur et récepteur focalisés ;
- La figure 5 est la représentation de la trace du signal émis par un transducteur et réfléchi sur la surface de la sphère ;
- La figure 6 est la représentation de la trace du signal transmis du transducteur émetteur au transducteur récepteur ;
- La figure 7 représente l'évolution de la vitesse calculée de l'onde transversale en fonction de l'angle d'incidence.

Description détaillée de l'invention

Pour illustrer l'invention on a appliqué la méthode à l'examen d'une sphère en acier inox. La sphère 1 présente, dans l'exemple développé ici, les caractéristiques suivantes

diamètre = 19,050mm,
masse = 28,1865 g
masse volumique $\rho$ = 7.789,2 kg/m$^3$

- Mesure de la vitesse de propagation de l'onde longitudinale

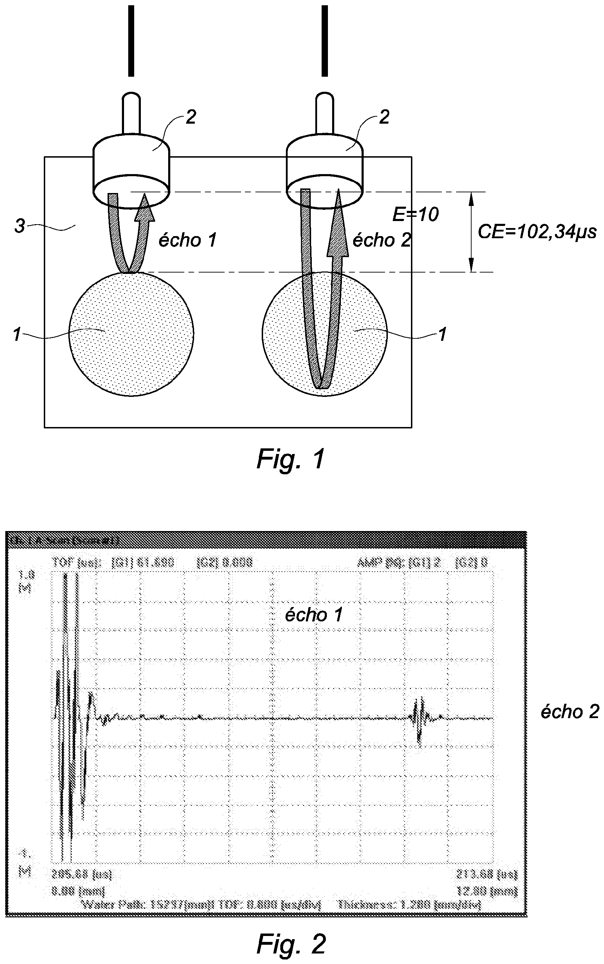

Un transducteur 2 est plongé dans un fluide de couplage 3, qui est de l'eau, avec la sphère 1. Le transducteur, tel que celui référencé Panametrics V322-6 de 10 MHz et focalisé à 6 pouces, est relié électriquement à un poste de commande et de réception des signaux qui n'est pas représenté. Il est placé en mode émission réception et est orienté dans l'axe passant par le centre de la sphère.
A partir du tracé de l'amplitude de l'onde ultrasonore produite en fonction du temps, tel que représenté sur la figure 2, on a relevé le temps $t_{L1}$ de propagation de celle-ci entre le transducteur 2 et l'interface à la surface de la sphère d'une part et le temps $t_{L2}$ de propagation entre le transducteur 2 et le fond de la sphère vu depuis le transducteur.
Les temps de propagation relevés sur le tracé de la figure 2 sont les suivants :

$t_{L1}$ = 205,517 $\mu$s,
$t_{L2}$ = 211,897 $\mu$s.

La vitesse de propagation de l'onde longitudinale $V_L$ est ainsi le rapport de deux fois le diamètre de la sphère sur le temps de parcours :

$$V_L = 2 \times \text{diamètre} / (t_{L2} - t_{L1})$$

soit, pour l'exemple, 38,10.10$^{-3}$ / 6,380.10$^{-6}$ = 5.971,8 m/s

- Mesure de la vitesse $V_T$ de l'onde transversale

On s'appuie sur le principe de la propagation d'une onde transversale $V_T$ dans une direction $D_2$ formant un angle donné $\beta$ par rapport à la direction $D_1$ de l'onde de transmission longitudinale par conversion de mode selon le principe des lois de Snell/Descartes.
On détermine l'angle d'incidence correct $\theta$ générant la propagation d'une onde transversale formant l'angle $\beta$ et le temps de parcours $t_2$ dans la sphère pour cette onde transversale. L'angle choisi est 45°.

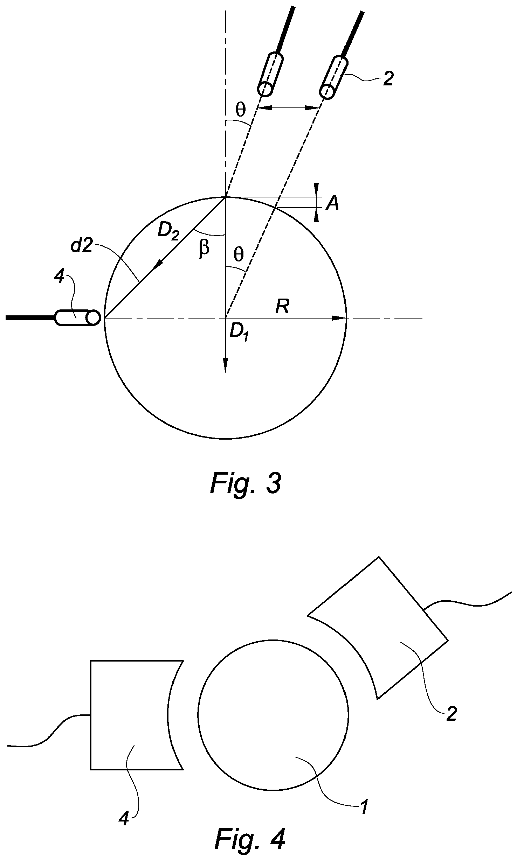

La méthode est décrite en référence à la figure 3 ; sur cette figure les capteurs et la bille ne sont pas à l'échelle, la bille est dilatée par rapport aux capteurs. Pour la mesure de $t_2$, on mesure séparément le temps $t_R$ de transmission des ondes à travers le fluide de couplage puis le temps de transmission $t_m$ à la fois dans la pièce et le fluide de couplage, on soustrait ensuite le temps $t_R$, corrigé le cas échéant, du temps $t_m$.

Le transducteur émetteur 2 est disposé dans un fluide de couplage avec la sphère, un transducteur récepteur 4 tel que celui référencé I3-1004-R 10 MHz 1" $\varnothing$ 0,250" est disposé latéralement à l'intersection de la direction $D_2$ avec la sphère.

La vitesse de propagation de l'onde transversale est ainsi le rapport de la distance $d_2$ séparant le point d'impact de l'onde ultrasonore et l'intersection avec la sphère selon cette direction $D_2$ : $d_2 = R.2^{1/2}$

Selon une première étape, on mesure le temps de parcours $t_R$ exact de l'onde, pour l'angle donné $\theta$, de la surface du capteur à la normale à la sphère. Le fluide de couplage permet de s'affranchir de la superposition des échos.

En plaçant le transducteur en mode émission-réception, on détermine le maximum d'amplitude du signal réfléchi. Ce maximum d'amplitude indique que le signal est normal à la sphère à l'angle $\theta$ considéré. Comme nous sommes en mode émission/réception, le temps de parcours est la moitié du temps mesuré sur l'écran d'oscilloscope.

Le capteur est ensuite déplacé horizontalement, de façon à amener le faisceau au sommet de la sphère. Le déplacement se calcule en fonction du rayon R de la sphère $R.tg\theta$

Dans cette seconde étape, on mesure le temps de parcours $t_m$ de l'onde jusqu'au transducteur récepteur 4.

La vitesse de l'onde transversale est le rapport de la distance $d_2$ parcourue par cette onde au temps $t_2$ mis pour la parcourir. Il faut ajuster la mesure du temps de parcours en raison du fait que le transducteur ayant été déplacé horizontalement, l'onde parcourt une distance plus courte.

L'ajustement du trajet A en termes de temps $t_A$ s'écrit :

$$t_A = R.(1\text{-}\cos\theta)/\cos\theta.V_{eau}$$

où $V_{eau}$ est la vitesse de propagation dans l'eau.

Le temps mesuré $t_m$ étant la somme du temps $(t_R\text{-}t_A)$ correspondant au trajet du transducteur jusqu'à la surface de la sphère et de celui $t_2$ du parcours le long de la corde $d_2$,

Le temps de parcours $t_2$ vaut donc :

$$t_2 = t_m - (t_R - t_A).$$

La vitesse de l'onde transversale est le rapport du parcours $d_2 = R\sqrt{2}$ au temps mis pour parcourir cette distance :

$$V_T = d_2/t_2$$

Pour un angle $\theta$ de 19°, on obtient les valeurs suivantes (mesure de temps à l'oscilloscope numérique de précision 1ns) :

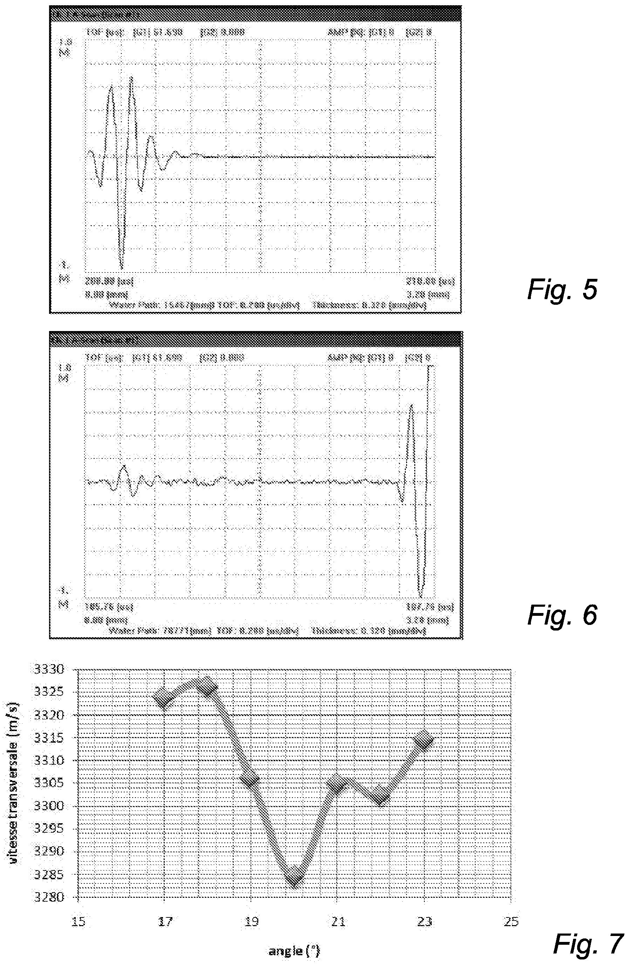

$V_{eau}$ = 1 486,5 m/s
$2.t_R$ = 202,63 $\mu$s (figure 5)
$t_m$ = 105,02 $\mu$s (figure 6)
déplacement : $R.tg\theta$ = 3,279 mm

$$t_A = R(1\text{-}\cos\theta)/\cos\theta.V_{eau} = 0,3692 \ \mu s$$

$$d = \sqrt{2}.R = 13,470 \ mm$$

$V_T$ = 3 306,2 m/s

La valeur 19° de l'angle $\theta$ est une estimation. Afin d'obtenir la bonne valeur de l'angle $\theta$ on effectue les mesures autour de cette estimation. Ainsi l'opération ci-dessus est renouvelée pour des angles $\theta$ compris entre 17° et 23°

Les valeurs des vitesses calculées sont reprises

|       |                        |
| ----- | ---------------------- |
| à 17° | $V_T$ = 3 323,7 m/s    |
| à 18° | $V_T$ = 3 326,1 m/s    |
| à 19° | $V_T$ = 3 306,2 m/s    |
| à 20° | $V_T$ = 3 284,4 m/s    |
| à 21° | $V_T$ = 3 304,8 m/s    |
| à 22° | $V_T$ = 3 302,3 m/s    |
| à 23° | $V_T$ = 3 314,5 m/s    |

La courbe obtenue et reproduite sur la figure 7 présente un point minimum de vitesse ; la vitesse correspondant au point minimum est associée au parcours le plus court par rapport à la distance séparant les deux transducteurs.

Ainsi $V_T$ = 3 284,4 m/s

Les valeurs obtenues pour les vitesses de transmission de l'onde sonore permettent de calculer les paramètres caractéristiques de la pièce.

Calcul des caractéristiques mécaniques d'une bille d'acier

$\rho$ = 7 789,2 kg/m$^3$

$V_L$ = 5 971,8 m/s

$V_T$ = 3 284,4 m/s

$$E = \rho V_T 2 \, (3V_L{}^2 - 4V_T{}^2) / (V_L{}^2 - V_T{}^2) = 215,6 \text{ GPa}$$

$$\nu = 0,5 \, (V_L{}^2 - 2V_T{}^2) / (V_L{}^2 - V_T{}^2) = 0,283$$

Calcul des caractéristiques mécaniques d'une bille en nitrure de silicium Si3N4 $\rho$ = 3 166,5 kg/m$^3$

$V_L$ = 11 202 m/s

$V_T$ = 6 041,8 m/s

$$E = \rho V_T 2 \, (3V_L{}^2 - 4V_T{}^2) / (V_L{}^2 - V_T{}^2) = 299,3 \text{ GPa}$$

$$\nu = 0,5 \, (V_L{}^2 - 2V_T{}^2) / (V_L{}^2 - V_T{}^2) = 0,295$$

Il est à noter que pour permettre une mesure de précision, il est souhaitable d'utiliser un transducteur récepteur 4 avec une très courte focale et donc un faible rayon de courbure, ce qui permet à la bille de se centrer, de sorte que son axe coïncide parfaitement avec l'axe géométrique du transducteur, la configuration préférée est montrée sur la figure 4.

**Revendications**

1. Méthode pour déterminer les propriétés élastiques d'une pièce sphérique, comprenant l'émission de faisceaux d'ondes ultrasonores en direction d'un point d'impact de la surface de la pièce sphérique de manière à générer des ondes dans ladite pièce, **caractérisée par le fait que**, connaissant le diamètre $d_1$ de la pièce au point d'impact dans une première direction $D_1$ et la longueur d'une corde $d_2$ dans une seconde direction formant un angle $\beta$ déterminé par rapport à la première direction, on effectue une première mesure $t_1$ du temps mis par des ondes ultrasonores longitudinales transmises pour parcourir la distance $d_1$ à partir dudit point d'impact, en disposant un transducteur émetteur (2) dans une première position, le transducteur émetteur (2) étant ensuite déplacé horizontalement dans une deuxième position, de façon à amener le faisceau au sommet de la pièce sphérique, une seconde mesure $t_2$ du temps mis par des ondes ultrasonores transversales transmises pour parcourir la distance $d_2$ à partir dudit point d'impact, étant donné que pour la mesure de $t_2$ on mesure séparément le temps $t_R$ de transmission des ondes à travers le fluide de couplage puis le temps de transmission $t_m$ à la fois dans la pièce et le fluide de couplage jusqu'à un transducteur récepteur (4) qui est différent du transducteur émetteur (2), on soustrait ensuite le temps $t_R$ du temps $t_m$, on détermine le module d'Young et/ou le coefficient de Poisson du matériau à partir des vitesses longitudinale $V_L = d_1/t_1$ et transversale $V_T = d_2/t_2$.

**2.** Méthode selon la revendication 1 selon laquelle le faisceau d'ondes ultrasonores est émis à travers un fluide de couplage, tel que l'eau.

**3.** Méthode selon l'une des revendications précédentes dont le matériau de la pièce est isotrope.

**4.** Méthode selon la revendication précédente dont le matériau est métallique ou céramique.

**5.** Méthode selon l'une des revendications précédentes dont l'angle $\beta$ est 45°.

**Patentansprüche**

**1.** Verfahren zum Bestimmen der elastischen Eigenschaften eines sphärischen Teils, umfassend das Emittieren von Ultraschallwellenbündeln in Richtung eines Auftreffpunkts der Oberfläche des sphärischen Teils, sodass Wellen in dem Teil erzeugt werden, **gekennzeichnet durch** die Tatsache, dass, unter Kenntnis des Durchmessers $d_1$ des Teils am Auftreffpunkt in einer ersten Richtung $D_1$ und der Länge einer Sehne $d_2$ in einer zweiten Richtung, die einen Winkel $\beta$ bilden, der in Bezug auf die erste Richtung bestimmt wird, eine erste Messung $t_1$ der Zeit durchgeführt wird, welche die übertragenen longitudinalen Ultraschallwellen benötigen, um die Distanz $d_1$ ab dem Auftreffpunkt zurückzulegen, unter Anordnen eines Emitter-Wandlers (2) in eine erste Position, wobei der Emitter-Wandler (2) anschließend horizontal so in eine zweite Position verschoben wird, dass das Bündel zum Scheitel des sphärischen Teils gebracht wird, eine zweite Messung $t_2$ der Zeit, welche die übertragenen transversalen Ultraschallwellen benötigen, um die Distanz $d_2$ ab dem Auftreffpunkt zurückzulegen, da für die Messung von $t_2$ die Zeit $t_R$ eines Übertragens der Wellen durch das Kopplungsfluid hindurch, dann die Übertragungszeit $t_m$ gleichzeitig in dem Teil und dem Kopplungsfluid bis zu einem Empfänger-Wandler (4), der sich vom Emitter-Wandler (2) unterscheidet, separat gemessen werden, schließlich wird die Zeit $t_R$ von der Zeit $t_m$ abgezogen, werden das Young-Modul und/oder der Poisson-Koeffizient des Materials ab den longitudinalen $V_L = d_1/t_1$ und transversalen $V_T = d_2/t_2$ Geschwindigkeiten bestimmt.

**2.** Verfahren nach Anspruch 1, wobei das Ultraschallwellenbündel durch ein Kopplungsfluid hindurch emittiert wird, wie zum Beispiel Wasser.

**3.** Verfahren nach einem der vorstehenden Ansprüche, wobei das Material des Stücks isotrop ist.

**4.** Verfahren nach dem vorstehenden Anspruch, wobei das Material metallisch oder keramisch ist.

**5.** Verfahren nach einem der vorstehenden Ansprüche, wobei der Winkel $\beta$ 45° ist.

**Claims**

**1.** Method for determining the elastic properties of a spherical part, comprising the emission of beams of ultrasonic waves in the direction of a impact point of the surface of the spherical part, so as to generate waves in said part, **characterised in that**, knowing the diameter $d_1$ of the part at the impact point in a first direction $D_1$ and the length of a chord $d_2$ in a second direction forming an angle $\beta$ determined with respect to the first direction, a first measurement $t_1$ is made of the time taken by longitudinal ultrasonic waves transmitted to travel the distance $d_1$ from said impact point, by placing a transducer-transmitter (2) in a first position, the transducer-transmitter (2) then being moved horizontally to a second position, so that to bring the beam to the summit of the spherical part, a second measurement of the time $t_2$ taken by the transverse ultrasonic waves transmitted to travel the distance $d_2$ from said impact point, given that for the measurement of $t_2$, separate measurements are made of the time $t_R$ of transmission of the waves through the coupling fluid and then for the transmission time $t_m$ both in the part and in the coupling fluid to a transducer-receptor (4) that is different from the transducer-transmitter (2), the time $t_R$ is then subtracted from the time $t_m$, the Young's modulus and/or the Poisson's ratio of the material from the longitudinal velocity $V_L = d_1/t_1$ and the transverse velocity $V_T = d_2/t_2$ are determined.

**2.** Method according to claim 1, according to which the beam of ultrasonic waves is emitted through a coupling fluid, such as water.

**3.** Method according to any of the preceding claims, wherein the material of the part is isotropic.

4.  Method according to the preceding claim, wherein the material is metallic or ceramic.

5.  Method according to any of the preceding claims, wherein the angle β is 45°.

**Fig. 1**

**Fig. 2**

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3416365 A